(19) **Europäisches Patentamt**
**European Patent Office**
**Office européen des brevets**

(11) **EP 2 527 541 A1**

(12) **EUROPEAN PATENT APPLICATION**
published in accordance with Art. 153(4) EPC

(43) Date of publication:
**28.11.2012 Bulletin 2012/48**

(51) Int Cl.:
**E02F 9/26** (2006.01)

(21) Application number: **11734683.3**

(22) Date of filing: **19.01.2011**

(86) International application number:
**PCT/JP2011/050879**

(87) International publication number:
**WO 2011/090077 (28.07.2011 Gazette 2011/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2010 JP 2010011556**

(71) Applicant: **Hitachi Construction Machinery Co., Ltd.**
**Bunkyo-ku,**
**Tokyo 112-8563 (JP)**

(72) Inventors:
• **SUZUKI Hideaki**
**Hitachi-shi**
**Ibaraki 319-1292 (JP)**
• **FURUNO Yoshinori**
**Tsuchiura-shi**
**Ibaraki 300-0013 (JP)**
• **NAKAMURA Kozo**
**Hitachi-shi**
**Ibaraki 319-1292 (JP)**

• **YUDA Shinya**
**Hitachi-shi**
**Ibaraki 319-1292 (JP)**
• **UCHIYAMA Hiroki**
**Hitachi-shi**
**Ibaraki 319-1292 (JP)**
• **TANAKA Hideyuki**
**Tsuchiura-shi**
**Ibaraki 300-0013 (JP)**
• **TANAKA Katsuaki**
**Hitachi-shi**
**Ibaraki 319-1292 (JP)**
• **MINOSHIMA Toshikazu**
**Tsuchiura-shi**
**Ibaraki 300-0013 (JP)**

(74) Representative: **Beetz & Partner**
**Patentanwälte**
**Steinsdorfstraße 10**
**80538 München (DE)**

(54) **LOADING GUIDE SYSTEM**

(57) Provided is a system by which a loading machine (202) guides a hauling machine (201) on the weight and the position of materials loaded on the hauling machine (202). The system includes: loaded state detection means (5, 6) for detecting the weight "p" and position "x" of materials already loaded on the hauling machine; hauling basic information storage means (7) for storing hauling basic information concerning the loaded state of the hauling machine; loading performance information storage means (11) for storing the loading performance information concerning the loading capacity of the loading machine; next operation calculation means (10) for calculating the next loading weight and the next loading position at which the loading machine should load materials in the next operation based on the hauling basic information, the loading performance information, and the weight and the position of materials on the hauling machine; and a display unit (12) that guides the operator of the loading machine on the next loading weight and the next loading position. This system enables the loading machine to load materials onto the hauling machine with high working efficiency.

FIG. 2

EP 2 527 541 A1

## Description

Technical Field

The present invention relates to a loading guide system that provides loading information to an operator when a loading machine such as a hydraulic shovel loads materials onto a hauling machine such as a dump truck, and also relates to the loading machine and the hauling machine concerning this system.

Background Art

Construction machines include loading machines for carrying out digging work and loading work, for instance a hydraulic shovel, and hauling machines onto which materials such as earth, sand, and rock is loaded and then hauled thereby, for instance a dump truck.

The hauling machines are set with standards such as normal loading capacity and normal loaded position as design specifications in order to maintain performance and for other reasons. Thus, a hauling machine should transport materials in an appropriate weight and the materials should be loaded at an appropriate position on the vessel of the hauling machine.

In view of this, a hauling machine such as a dump truck is equipped with lamps on both sides of its dump body, which give status indications according to the weight of the materials so that an operator can be informed of the weight of the materials. Referring to the lamps, the operator of the loading machine such as a hydraulic shovel can be notified of overloading or the like.

In addition, in some hauling machines such as a dump truck, marks indicating the normal loaded position are provided on the left and right side of the dump body so that the operator of the loading machine such as a hydraulic shovel can load materials on a predetermined position by using the marks as a rough standard. However, in this case, only a rough standard of the positional relationship between the normal loaded position and the actual position of materials on the sides can be known, and their relation in terms of balance in the front and rear direction and the balance of the whole dump body cannot be known.

In addition, when the weight of the loaded materials exceeds the normal loading capacity, an unexpected overload may be applied to the tires of the hauling machine, causing the life of the tires to be remarkably shortened. Moreover, when the position of the loaded materials deviates from the normal loaded position, the load of the materials would be concentrated on one side. An unexpected overload may be applied to a specific tire, causing the life of the tire to be shortened.

In order to solve such problems, for example, Patent Document 1 discloses a technique in which a load acting on a hauling machine is calculated, and when this load exceeds a limit value, the operator of the loading machine receives warning information so that the operator can be informed of the overloading.

As another example, Patent Document 2 discloses a technique in which unbalance of the load acting on a hauling machine is detected and notified to the operator of the hauling machine, and then the materials is supported in such a manner that the unbalance of the load would be corrected.

Prior Art Literature

Patent Documents

Patent Document 1: JP-2008-240461-A
Patent Document 2: JP-2007-230425-A

Summary of the Invention

Problems to be Solved by the Invention

However, in actuality, the operator of the loading machine cannot know the loaded state (the weight and the position of materials on the hauling machine) of the hauling machine sequentially. The operator can notice overloading only after warning information on overloading is issued.

In addition, in actuality, the operator of the hauling machine cannot know the unbalanced loading of the materials until the operator is notified of the unbalance of the load acting on the hauling machine.

If the operator is to notice overloading or unbalance of the load after the warning information on overloading or unbalance of the load is issued, extra work such as reloading will be required.

Moreover, even if the operator is notified of the warning information on overloading or unbalance of the load, the weight of overloading or the degree of unbalance is not specifically informed. The operator would not be able to quantitatively determine how much correction should be made for the overloading and unbalance of the materials, and reload work will be required after all.

In reloading work, the materials are once unloaded and then loaded again on the loading machine, which requires some time to complete. Accordingly, even when an operator is notified of warning information on overloading or unbalance of the load, it is often that the materials are hauled without reloading.

The present invention has been made taking the above-described problems into consideration, and an object of the present invention is to provide a loading guide system which enables a loading machine to load materials onto a hauling machine with high working efficiency.

Another object of the present invention is to provide a loading machine and a hauling machine adapted such that the loading machine can load materials onto the hauling machine with high working efficiency.

Means for Solving the Problems

One aspect of the present invention provides a loading guide system that, when a loading machine is to load materials onto a hauling machine, guides the loading machine or an operator thereof on at least, of the weight and the position of materials loaded on the hauling machine, the weight of materials on the hauling machine.

The loading guide system includes: loaded state detection means for detecting at least, of the weight and the position of materials loaded on the hauling machine, the weight of materials on the hauling machine; hauling basic information storage means for storing hauling basic information concerning the loaded state of the hauling machine; loading performance information storage means for storing loading performance information concerning the loading capacity of the loading machine; and next operation calculation means for, when the loading machine is to load materials onto the hauling machine in the next loading, calculating at least, of the next loading weight and the next loading position, the next loading weight based on the hauling basic information, the loading performance information, and the quantity detected by the loaded state detection means.

Another aspect of the present invention provides a loading machine that, when the loading machine is to load materials onto a hauling machine, guides an operator on at least, of the weight and the position of materials loaded on the hauling machine, the weight of materials on the hauling machine. The loading machine includes: informing means that, when the loading machine is to load the materials onto the hauling machine in the next loading, calculates at least, of the next loading weight and the next loading position, the next loading weight and then informs the operator of the calculated information, the informing means calculating the information based on hauling basic information concerning the loaded state of the hauling machine, loading performance information concerning the loading capacity of the loading machine, and at least the weight of materials already loaded on the hauling machine of the weight and the position thereof.

The informing means may be a display unit that displays the calculated information on a screen, or a voice generation device that guides the operator with voice.

The loading machine is also provided with loading means for loading materials onto the hauling machine.

The loading machine is also provided with detection means for detecting the position of the loading means. In addition, preferably, the loading machine includes informing means for informing the operator of the loading machine that the position of the loading means coincides with the next loading position.

The informing means may be a display unit that displays the calculated information on a screen, or a voice generation device that guides the operator with voice. In addition, the loading means may be adapted to automatically stop at an appropriate position with respect to the hauling machine.

The loading machine is also provided with loading information receiving means for receiving the weight and the position of materials loaded on the hauling machine, and the hauling basic information from the hauling machine.

Further, the loading machine is also provided with: loading performance information storage means for storing the loading performance information concerning the loading capacity of the loading machine; and next operation calculation means for, when the loading machine is to load materials onto the hauling machine in the next loading, calculating loading information, that is, at least the next loading weight of the next loading weight and the next loading position based on the hauling basic information, the loading performance information, and at least the weight of the weight and the position of materials loaded on the hauling machine.

Another aspect of the present invention provides a hauling machine that, when a loading machine is to load materials onto the hauling machine, guides the loading machine on at least, of the weight and the position of materials loaded on the hauling machine, the weight of materials on the hauling machine. The hauling machine includes loading information notification means for notifying the loading machine of the weight and the position of materials loaded on the hauling machine, and the hauling basic information concerning the loaded state.

The hauling machine also includes: loaded state detection means for calculating at least, of the weight and the position of materials loaded on the hauling machine, the weight of materials on the hauling machine; and hauling basic information storage means for storing hauling basic information concerning the loaded state of the hauling machine.

Effects of the Invention

According to the present invention, a loading machine can perform appropriate loading in accordance with the normal loading capacity and the normal loaded position. Overloading of materials or biased concentration of the weight of materials on the hauling machine can be reduced, thereby preventing an unexpected overload being applied to the tires or a specific tire of the hauling machine. Therefore, the tires of the hauling machine can complete their expected life.

Brief Description of the Drawings

Fig. 1 is a diagram schematically illustrating a dump truck and a hydraulic shovel presented in this embodiment;
Fig. 2 is a diagram illustrating the configuration of a navigation system presented in this embodiment;
Fig. 3 is a diagram illustrating display states displayed on a display unit presented in this embodiment;
Fig. 4 is a first process flowchart illustrating a process flow of the loaded materials information navigation system presented in this embodiment;
Fig. 5 is a diagram schematically illustrating how pressure sensors of the dump truck presented in this embodiment are disposed;
Fig. 6 is a graph illustrating changes in the values of the pressure sensors presented in this embodiment;
Fig. 7 is a second process flowchart illustrating a process flow of the loaded materials information navigation system presented in this embodiment;
Fig. 8 is a diagram schematically illustrating position sensors presented in this embodiment; and
Fig. 9 is a diagram illustrating display states displayed on the display unit presented in this embodiment.

Best Modes for Carrying out the Invention

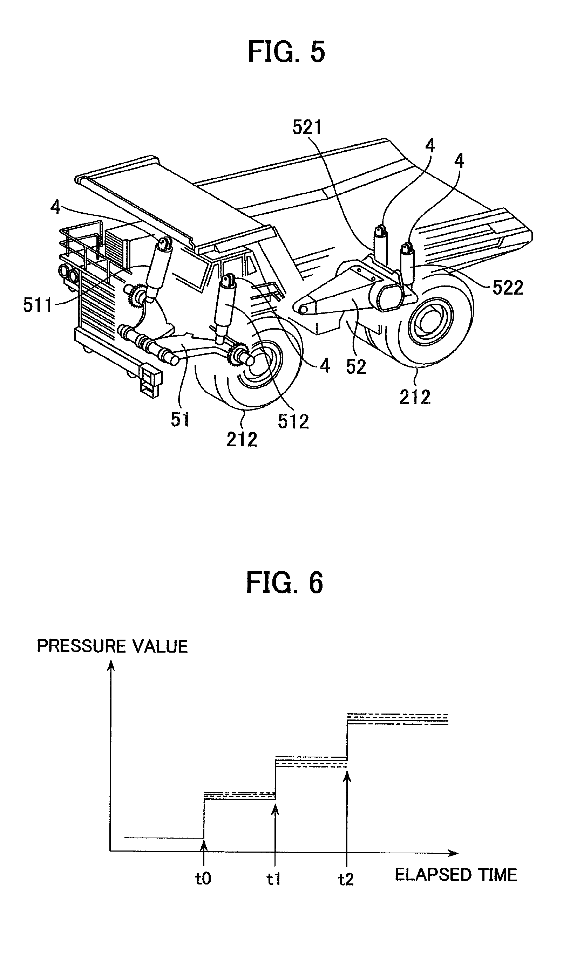

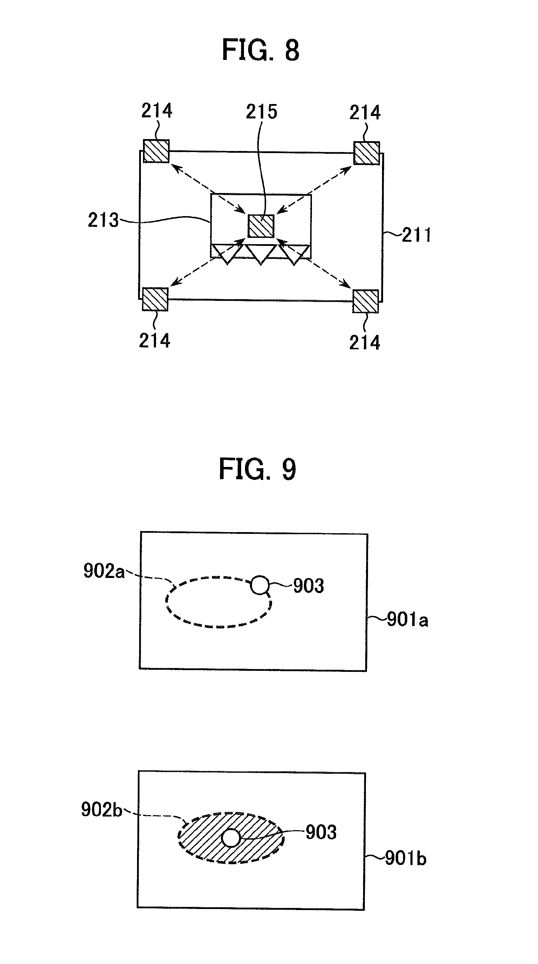

One embodiment of the present invention will be described with reference to drawings.

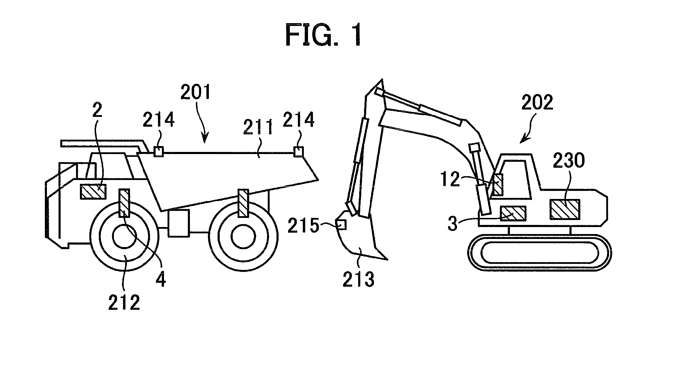

Fig. 1 is a diagram schematically illustrating a dump truck and a hydraulic shovel presented in this embodiment.
As shown in Fig. 1, the dump truck (hauling machine) 201 is equipped with a loaded state notification apparatus 2, and the hydraulic shovel (loading machine) 202 is equipped with a next operation guiding apparatus 3.
The dump truck 201 also has pressure sensors 4 disposed near the four tires 212 of the dump truck 201. The pressure sensors 4 disposed at four positions measure the weights applied upon the four tires 212 from a vessel 211 on which materials is loaded as pressures. Fig. 5 illustrates an example of a specific configuration of the pressure sensors. In the example shown in Fig. 5, through suspensions 51, 52 connected to the four tires 212, the pressure sensors 4 are mounted to cylinders 511, 512, 521, 522 respectively. The pressure sensors 4 are configured to be able to measure pressures corresponding to the weights applied to the cylinders 511, 512, 521, 522 respectively, and the measured pressures (pressure signals) are output to the loaded state notification apparatus 2. Incidentally, as an alternative to the abovementioned sensors, for example, sensors that measure the air pressures inside the tires 212 may be used.
A display device 12 provided in the hydraulic shovel 202 is a display for displaying, to the operator of the hydraulic shovel 202, the weight and the position of materials loaded on the hauling machine which are calculated by the next operation guiding apparatus 3.
The hydraulic shovel 202 has a bucket 213 as a loading means for loading materials onto the dump truck 201, and uses the bucket 213 to carry out digging work and loading work.
In addition, the vessel 211 of the dump truck 201 and the bucket 213 of the hydraulic shovel 202 are equipped with transceivers/receiver 214 and 215. The transceivers/receiver 214 and 215 function as detection means (position sensors) for detecting the position of the bucket 213 with respect to the vessel 211 when the hydraulic shovel 202 is loading materials onto the dump truck 201. The vessel 211 is equipped with the transmitters 214, and the bucket 213 is equipped with the receiver 215.
It is necessary to provide the vessel 211 with the transmitters 214 at least at three positions. For example, in the case of three positions, it is desirable that one is disposed at the center of the front side of the vessel 211, and two are disposed at the edges of the rear side of the vessel 211. In the case of four positions, it is desirable that two are disposed at the edges of the front side of the vessel 211 and two are disposed at the edges of the rear side of the vessel 211. Fig. 8 is a diagram illustrating an example in which the vessel 211 is provided with the transmitters 214 at four positions.

Regarding the position sensors (the transmitters and receiver 214, 215) shown in Fig. 8, the plurality of transmitters 214 attached to the vessel 211 transmit signals in synchronization (concurrently) to the receiver 215 attached to the bucket 213.

The differences of the time the signals are received by the receiver 215 after being transmitted from the transmitters 214, in other words, the differences in the arrival time (delay time) of the signals are calculated to thereby determine the position of the bucket 213 in the vessel 211. Information of the detected position of the bucket 213 is inputted into the next operation guiding apparatus 3.

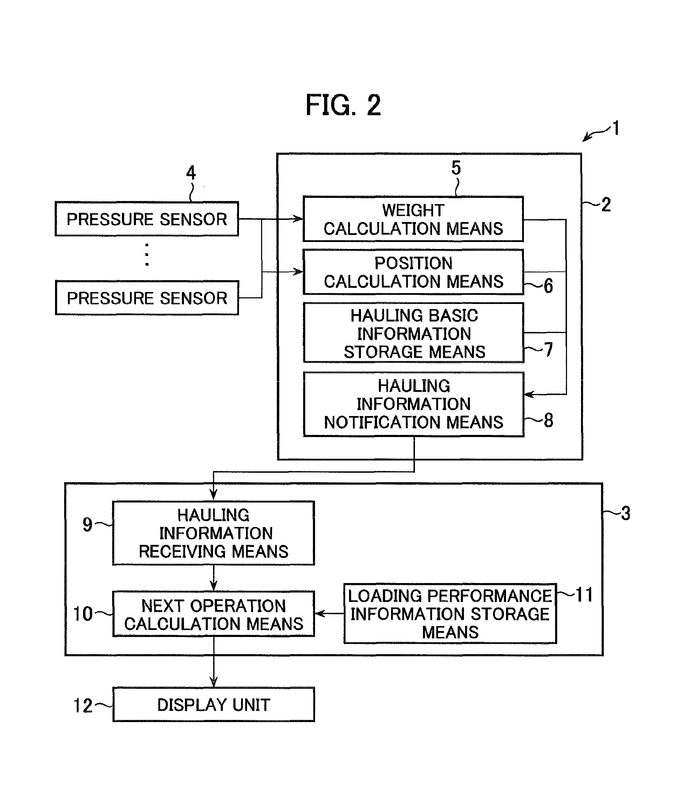

Fig. 2 is a diagram illustrating the configuration of a navigation system presented in this embodiment.

A loaded materials information navigation system (loading guide system) 1 shown in Fig. 2 guides the operator on the weight and the position when the loading machine (for example, the hydraulic shovel) loads materials onto the hauling machine (for example, the dump truck).

The loaded materials information navigation system 1 is provided with the loaded state notification apparatus 2 and the next operation guiding apparatus 3. It is desirable that the hauling machine be provided with the loaded state notification apparatus 2, and the loading machine is provided with the next operation guiding apparatus 3. However, not all of their functions are necessarily required to be installed in the hauling machine and the loading machine, respectively. For example, the loading machine may incorporate part of the functions to be allocated to the hauling machine, and the hauling machine may incorporate part of the functions to be allocated to the loading machine. Further, the loaded state notification apparatus 2 and the next operation guiding apparatus 3 may be disposed at positions apart from the hauling machine and the loading machine respectively so long as pressure signals from the pressure sensors 4 can be received, and so long as the next loading weight and the next loading position which are calculated by the next operation guiding apparatus 3 can be transmitted to the display unit 12.

Moreover, in such a system that the operations of the hauling machine (dump truck) 201 and the loading machine (hydraulic shovel) 202 are automated, it is not necessary to equip the loading machine with the display unit 12 in terms of displaying the guidance of the next operation. Therefore, it is desirable that the output of the next operation guiding apparatus 3 (the next loading weight and the next loading position calculated by the next operation guiding apparatus 3) is inputted into, instead of the display unit 12, the controller 230 (refer to Fig. 1) which controls the operation of the loading machine (hydraulic shovel) 202. Inputting the next loading weight and the next loading position into the controller 230, the hydraulic shovel 202 can operate using the next loading weight and the next loading position as target values for the next loading.

According to this embodiment, the hauling machine is provided with the loaded state notification apparatus 2.

In addition, the loaded state notification apparatus 2 is provided with: a weight calculation means (a weight calculation unit) 5 and a position calculation means (a position calculation unit) 6 as loaded state detection means for detecting the weight and position of materials on the hauling machine; a hauling basic information storage means (a hauling basic information storage unit) 7 for storing hauling basic information (the normal loading capacity and the normal loaded position) concerning the loaded state (the weight and the position of materials on the hauling machine) of the hauling machine; and a hauling information notification means (a hauling information notification unit) 8 for notifying the loading machine of the hauling basic information, the weight and the position of materials on the hauling machine.

According to this embodiment, the loading machine is provided with the next operation guiding apparatus 3.

The next operation guiding apparatus 3 is provided with: a hauling information receiving means (a hauling information receiving unit) 9 for receiving hauling basic information, the weight and the position of materials on the hauling machine notified by the hauling information notification means (a hauling information notification unit) 8; a loading performance information storage means (a loading performance information storage unit) 11 for storing loading performance information (standard loading weight) about the loading capacity of the loading machine (the weight that can be loaded by one bucket); and a next operation calculation means (a next operation calculation unit) 10 for calculating the next loading weight and the next loading position for the next operation of the loading machine based on the weight and the position of materials on the hauling machine, the hauling basic information and the loading performance information.

Incidentally, the loaded state notification apparatus 2 and the next operation guiding apparatus 3, included in the loaded materials information navigation system 1, are each provided with: an arithmetic and control unit (not illustrated) constituted of a CPU (Central Processing Unit) and the like; a program executed by the arithmetic and control unit; a storage unit for storing data calculated by the program, data inputted by an external terminal, and the like (for example, a ROM, a RAM; the storage unit may be called a "memory" in this embodiment); an input-output interface (not illustrated) to which input units (a mouse, a keyboard and the like) and output units (the display unit 12 and the like) are connected; and a communication device which communicates with the external terminal (the communication device may be called a "transceiver" in this embodiment).

The weight calculation means 5 and the position calculation means 6, which are included in the loaded state notification apparatus 2, are loaded state detection means for detecting the weight and the position of materials on the hauling machine, and are formed of programs which perform the undermentioned calculation (refer to Equations 1 and 2).

The hauling basic information storage means 7 is a memory for storing hauling basic information about a loaded state of the hauling machine. The hauling information notification means 8 is a wireless communication transceiver for notifying the loading machine of the loading quantity, the loading position and the hauling basic information. Incidentally, the memory also stores ID numbers used to identify hauling machines.

Referring to the next operation guiding apparatus 3, the next operation calculation means 10 is formed of programs that perform the undermentioned calculation (refer to Equations 3 to 7). Through this calculation, the next operation calculation means 10 finds the next loading weight and the next loading position at which the loading machine should load the materials in the next operation based on the weight and the position of materials on the hauling machine, the hauling basic information and the loading performance information.

The loading performance information storage means 11 is a memory (storage unit) for storing the loading performance information about the loading capacity of the loading machine. The hauling information receiving means 9 is a wireless communication transceiver (communication device) for receiving the hauling basic information notified by the hauling information notification means 8, and the weight and the position of materials on the hauling machine.

Next, the operation of the loaded materials information navigation system 1 will be described.

The pressure sensors 4 disposed near the four tires 212 of the dump truck 201 each measure, as a pressure, the weight of the materials loaded onto the vessel 211. In other words, the pressure sensors 4 are capable of measuring, as pressures, the weights applied from the vessel 211 to the four tires 212 at four positions.

The loaded state notification apparatus 2 installed in the dump truck 201 inputs pressure signals received from the pressure sensors 4 at the four positions into the weight calculation means 5 and the position calculation means 6.

Consequently, based on the measured values (pressure signals) of the pressures measured by the pressure sensors 4, the weight calculation means 5 calculates the weight of the materials, and the position calculation means 6 calculates the position (gravity center position) of the materials.

$$p = a\,(p_1 + p_2 + p_3 + p_4) \quad \text{(Equation 1)}$$

The weight calculation means 5 calculates the weight "p" of the materials according to Equation 1 described above.

More specifically, assuming that the measured values of the pressures measured by the pressure sensors 4 are $p_1$ (kPa) to $p_4$ (kPa), the weight "p" (ton) of the materials can be calculated by multiplying the sum of $p_1$ to $p_4$, by a coefficient "a". Here, the coefficient "a" (ton/kPa) is a constant used to convert the pressure into weight based on the knowledge that the pressure is proportional to the weight.

$$x = a\,(p_1 x_1 + p_2 x_2 + p_3 x_3 + p_4 x_4)/p \quad \text{(Equation 2)}$$

The position calculation means 6 calculates the gravity center position "x" of the materials according to Equation 2.

More specifically, on the assumption that positions of the pressure sensors 4 are $x_1$ to $x_4$, the gravity center position "x" of the materials can be calculated by use of the measured values $p_1$ to $p_4$ of the pressures and the coefficient "a". Here, the positions $x_1$ to $x_4$ and the gravity center position "x" are position vector quantities whose initial points are at a predetermined position (for example, the center of the vessel 211). Incidentally, the positions calculated here are two-dimensional positions on the vessel as viewed from above, and therefore the positions $x_1$ to $x_4$ and the gravity center position "x" have only to be expressed as two-dimensional vectors.

As the hauling basic information that concerns the loaded state of each dump truck, the hauling basic information storage means 7 stores the normal loading capacity "m" and the normal loaded position "c" which are values peculiar to each dump truck 201. The normal loaded position "c" is a position vector quantity whose initial point is at the same predetermined position (for example, the center of the vessel 211) as those of the positions $x_1$ to $x_4$ and the gravity center position "x".

The normal loading capacity "m" indicates the loading capacity of each dump truck; and the normal loaded position "c" indicates the gravity center position peculiar to each dump truck (the position with which the center of gravity of the materials is desired to be aligned). To be more specific, the normal loading capacity "m" and the normal loaded position "c" indicate the weight and position of the materials at which conditions the most economical transportation can be achieved considering the motive power performance of the hauling machine (dump truck), load sharing rate of tires, allowable loads of the tires, etc.

The next operation guiding apparatus 3 installed in the hydraulic shovel 202 is notified of (input with), via the hauling information notification means 8, the weight "p", the gravity center position "x", the normal loading capacity "m" and the normal loaded position "c".

The next operation guiding apparatus 3 installed in the hydraulic shovel 202 receives, from the loaded state notification apparatus 2 and through the hauling information receiving means 9, the weight "p", the gravity center position "x", the normal loading capacity "m" and the normal loaded position "c".

As the loading performance information of the hydraulic shovel 202, the loading performance information storage means 11 stores the standard loading weight "b" which is a value peculiar to the hydraulic shovel 202. Incidentally, the standard loading weight "b" is the weight of the materials capable to be loaded, and it is determined by factors such as the vehicle body performance of the loading machine and the kind of the attachment (e.g., bucket). In this embodiment, the standard loading weight "b" indicates the maximum weight of the materials that can be loaded by the bucket 213 of the hydraulic shovel 202.

The next operation calculation means 10 calculates the weight (next loading weight) "q" and position (next loading position) "y" at which the materials should be loaded onto the dump truck 201 by the hydraulic shovel 202 in the next loading, based on Equations 3 to 7 using the loading weight "p", the gravity center position "x", the normal loading capacity "m" and the normal loaded position "c" notified from the loaded state notification apparatus 2 through the hauling information receiving means 9, and the standard loading weight "b" stored in the loading performance information storage means 11. Incidentally, in this embodiment, the gravity center position (next gravity center position) of the materials which should be loaded in the next loading is calculated as the next loading position "y".

$$y = (mc - px)/q \qquad (\text{Equation 3})$$

$$m - p < b \qquad (\text{Equation 4})$$

$$q = m - p \qquad (\text{Equation 5})$$

$$m - p \geq b \qquad (\text{Equation 6})$$

$$q = b \qquad (\text{Equation 7})$$

To be more specific, according to Equation 3, the product of the loading weight "p" and the gravity center position "x" is subtracted from the product of the normal loading capacity "m" and the normal loaded position "c", and the value obtained by the subtraction is then divided by the next loading weight "q" to thereby calculate the next gravity center position (next loading position) "y".

In addition, when the condition of Equation 4 holds, or more specifically, when the value obtained by subtracting the loading weight "p" from the normal loading capacity "m" is smaller than the standard loading weight "b", the next loading weight "q" becomes equal to the value obtained by subtracting the weight "p" from the normal loading capacity "m" according to Equation 5.

Meanwhile, when the condition of Equation 6 holds, or more specifically, when the value obtained by subtracting the weight "p" from the normal loading capacity "m" is greater than or equal to the standard loading weight "b", the next loading weight "q" becomes equal to the standard loading weight "b" according to Equation 7.

Thus, the next loading weight "q" is determined in such a manner that it would not exceed the standard loading weight "b" and the cumulative loading weight (weight of the materials on the hauling machine) would become equal to the normal loading capacity "m". Using the determined next loading weight "q", the next gravity center position (next loading position) "y" is also determined.

The next operation guiding apparatus 3 informs the operator of the hydraulic shovel 202 of the next loading weight "q" and the next gravity center position (next loading position) "y", which have been calculated as described above through an informing means (in this embodiment, the display unit 12) provided in the hydraulic shovel 202. Incidentally, instead of the display unit 12 that displays the next loading weight and the next loading position on a screen, for example, a voice generation device that gives guidance with voice may be used as the informing means for informing the next loading weight and the next loading position to the operator.

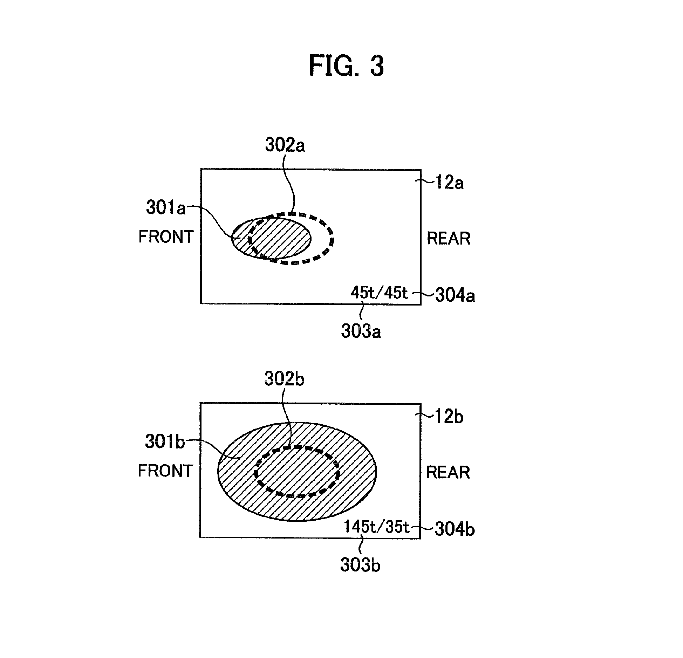

Fig. 3 shows examples of display states that are displayed on the display unit 12 presented in this embodiment.

The drawings in Fig. 3 are schematic views of the vessel 211 of the dump truck 201 from above, which are examples of display states displayed on the display unit 12 of the hydraulic shovel 202. The drawing on the left shows a display state 12a and the drawing on the right shows a display state 12b displayed on the display unit 12).

The next loading weight "q" and the next gravity center position "y", which had been calculated by the next operation guiding apparatus 3, are output to the display unit 12 on which they are displayed as shown in Fig. 3.

The dump truck 201 of this embodiment is assumed to be such that the normal loading capacity "m" is 180 t, and the standard loading weight "b" is 45 t. In addition, in the drawings, the left side corresponds to the front of the dump truck 201 and the right side corresponds to the rear of the dump truck 201.

The display state 12a shows the gravity center position 301a and the next gravity center position 302a, and also displays the weight 303a and the next loading weight 304a with numerical values.

Here, the gravity center position 301a schematically indicates the current position of the materials on the vessel 211, and the substantial center of this oval (the intersection point between the long diameter and the short diameter of the oval) is calculated and set as the gravity center position "x". The size of this oval represents the cumulative loading weight (weight "p").

Incidentally, the relationship between the size of the oval and the loading weight "p" needs to be managed and stored beforehand by use of a table or the like. The size of the oval increases with the increase in loading weight "p".

The weight 303a displays the cumulative loading weight (weight "p") as numerical data. The weight 303a reads "45 t" in the display state 12a.

In the display state 12a, the difference of the normal loading capacity "m" (180 t) and the weight "p" (45 t) is larger than the standard loading weight "b" (45 t), and thus the condition of Equation 6 holds. Therefore, the next loading weight "q" is calculated from Equation 7 to be the standard loading weight "b" (45 t). This value is displayed as the next loading weight 304a (45 t).

With this value on the display, the operator of the hydraulic shovel 202 can know that the next loading should be performed at the standard loading weight "b".

The next gravity center position 302a shows the calculated next gravity center position (next loading position) "y". In the display state 12a, the next gravity center position 302a suggests the position for the next loading to the operator of the hydraulic shovel 202.

Incidentally, as with the size of the oval of the gravity center position 301a, the oval of the next gravity center position 302a is displayed in larger size in proportion to the next loading weight "q". Therefore, when the oval of the next gravity center position 302a is to be displayed, a table or the like that has been managed and stored beforehand is used. In addition, although the next gravity center position 302a is expressed by an oval in this embodiment, the next gravity center position 302a may instead be expressed by displaying a figure or the like at a position corresponding to the center of the oval (the intersection point between the long diameter and the short diameter) (the same applies to the next gravity center position 302b described below).

Therefore, at the time of the next loading, the operator of the hydraulic shovel 202 can locate the desirable position of the materials.

The display state 12b displays the gravity center position 301b and the next gravity center position 302b, and the weight 303b and the next loading weight 304b are also displayed with numerical values.

Here, the gravity center position 301b schematically indicates the current position of the materials on the vessel 211, and the substantial center of this oval (the intersection point between the long diameter and the short diameter of the oval) is calculated and set as the gravity center position "x". The size of this oval represents the cumulative loading weight (weight "p").

Incidentally, the relationship between the size of the oval and the weight "p" needs to be previously managed and stored by use of a table or the like. The size of the oval increases with the increase in weight "p".

The weight 303b displays the cumulative loading weight (weight "p") as numerical data. The weight 303b reads "145 t" in the display state 12b.

In the display state 12b, the difference of the normal loading capacity "m" (180 t) and the weight "p" (145 t) is smaller than the standard loading weight "b" (45 t), and thus the condition of Equation 4 holds. Therefore, the next loading weight "q" is calculated from Equation 5 to be 35 t (the normal loading capacity "m" (180 t) - the weight "p" (145 t) = 35 t). This value is displayed as the next loading weight 304b (35 t).

Regarding the next loading, the operator of the hydraulic shovel 202 can find that the loading cannot be performed at the standard loading weight "b", and accordingly intends to perform the next loading at the weight lower than the standard loading weight "b".

The next gravity center position 302b shows the calculated next gravity center position (next loading position) "y". In the display state 12b, the next gravity center position 302b suggests the position for the next loading to the operator of the hydraulic shovel 202.

Incidentally, the size of the oval is displayed by use of a table or the like that has been managed and stored beforehand.

Therefore, regarding the next loading, the operator of the hydraulic shovel 202 can locate the desirable position of materials.

Further, in order to support the loading work of the operator of the hydraulic shovel 202, the next operation calculation means 10 in this embodiment executes a program that, when the position of the bucket 213 in the vessel 211 is detected by the transmitters/receiver 214, 215 (position sensors (detection means for detecting a position of the bucket 213)), informs the operator through the display unit (informing means) 12 that the position of the bucket 213 has matched with the next gravity center position (next loading position) "y".

Fig. 9 shows display examples concerning this program. In the display state 901a shown on the left, the position 90e of the bucket 213 (here displayed with a circle) does not coincide with the next gravity center position 902a (although in a precise sense the next gravity center position corresponds to the center of the oval 902a, the oval 902a itself is here referred to as the next gravity center position for convenience sake). Therefore, the operator operates the hydraulic shovel 202 with reference to the information displayed on the display unit 12 in such a manner that the two positions coincide with each other. In this embodiment, from the viewpoint of clearly notifying the operator that the bucket position 903 coincides with the next gravity center position 902a, the next operation calculation means 10 executes a program that, when the next gravity center position 902a is contained inside a figure (circle) indicating the bucket position 903 and thus the two positions are determined to coincide with each other, changes the display of the oval 902a to a display like the oval 902b in the display state 901b.

Incidentally, in this embodiment, when the bucket position 903 coincides with the next gravity center position 902, the display of the next gravity center position is changed to a display like the oval 902b. The matching of the two positions may alternatively be indicated by changing the display of the bucket position 903. Further, in this embodiment, the operator of the hydraulic shovel 202 is informed through the display unit 12 that the bucket position coincides with the next gravity center position. The operator may instead be informed by use of voice generated by a voice generation device, or other informing means such as a warning light.

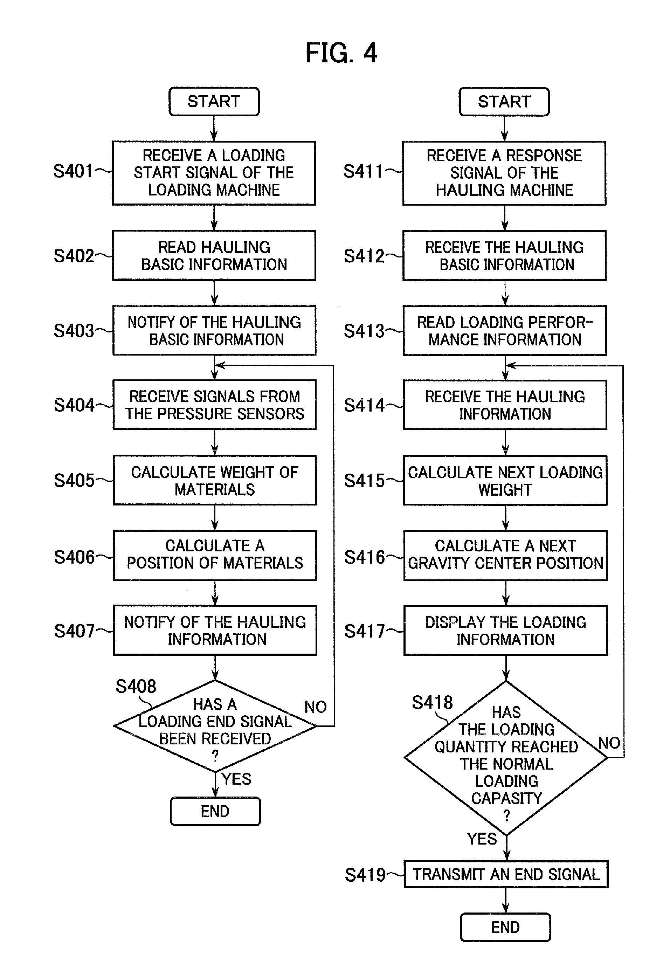

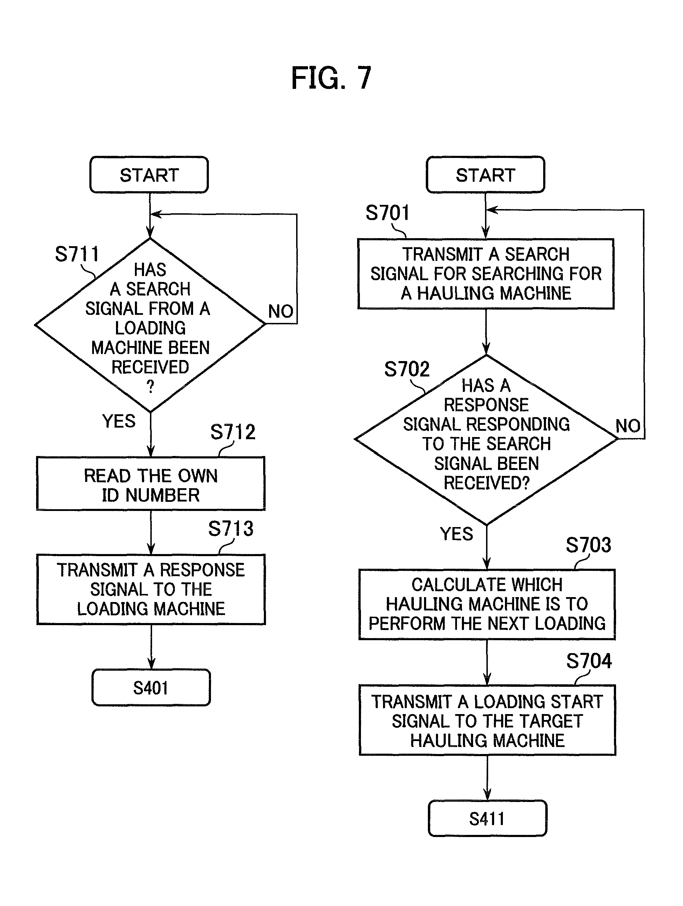

Fig. 4 shows a first process flowchart of the loaded materials information navigation system presented in this embodiment. The process flowchart on the left in Fig. 4 illustrates a flow of process performed in the loaded state notification apparatus 2 (dump truck 201), whereas the process flowchart on the right in Fig. 4 illustrates a flow of process performed in the next operation guiding apparatus 3 (hydraulic shovel 202). Fig. 7 is a second process flowchart of the loaded materials information navigation system shown in this embodiment. The process flowchart on the left in Fig. 7 illustrates a flow of process performed in the loaded state notification apparatus 2, whereas the process flowchart on the right in Fig. 7 illustrates a flow of process performed in the next operation guiding apparatus 3.

The process flow of the loaded materials information navigation system 1 will be described with reference to Figs. 4 and 7.

First, as shown in Fig. 7, the next operation guiding apparatus 3 which is installed in the loading machine (hydraulic shovel) 202 transmits a search signal for searching whether an approaching hauling machine (dump truck) 201 exists in the vicinity of the loading machine (step s701).

Meanwhile, the loaded state notification apparatus 2 which is installed in the dump truck 201 checks whether or not the search signal in the step s701 is being transmitted from the hydraulic shovel 202 (step s711). When it is determined in the step s711 that the search signal has been received, the loaded state notification apparatus 2 reads out the ID number of the dump truck 201 (own ID number) from the hauling basic information storage means 7 (step s712), and then transmits a response signal (first response signal) to the hydraulic shovel 202 with the read ID number (step s713). After the response signal is transmitted in the step s713, the process proceeds to the step s401 in Fig. 4.

The next operation guiding apparatus 3 that transmitted the search signal in the step s701 repeats transmission of a search signal (step s701), and waits until a response signal (first response signal) is received from the loaded state notification apparatus 2 (step s702). When the response signal is received, the process proceeds to the step s703. In the step s703, the dump truck 201 that transmitted the response signal is determined as the target of the next loading work according to the ID number added to the response signal. Regarding this step, there may be a plurality of dump trucks 201 around the hydraulic shovel 202 and the next operation guiding apparatus 3 may receive a plurality of response signals from the dump trucks 201. Then, the closest dump truck 201 may be calculated and selected as the target of the next loading work according to the strengths of the received response signals or other factor. When only one dump truck 201 exists in the vicinity, the one dump truck 201 is determined as the target of the next loading work. After the target of the next loading work is determined in the step s703, the next operation guiding apparatus 3 transmits a loading start signal to the dump truck 201 that has been determined as the target (step s704). The process then proceeds to the step s411 in Fig. 4.

Next, after transmitting the first response signal in the step s713 in Fig. 7, the loaded state notification apparatus 2 receives the loading start signal (communication signal) that has been transmitted from the next operation guiding apparatus 3 (hydraulic shovel 202) in the step s704 in Fig. 4. The loaded state notification apparatus 2 transmits a signal (second response signal) to the next operation guiding apparatus 3 in response to the received communication signal so as to notify it of reception (step s401). In usual sites, dump trucks produced by various manufacturers are used as hauling machines, and therefore the normal loading capacity "m" and the normal loaded position "c" often vary with each dump truck. However, if processing such as that described above is carried out, the dump truck 201 onto which the hydraulic shovel 202 is to load materials can be identified.

On reception of the loading start signal from the next operation guiding apparatus 3 in the step s401, the loaded state notification apparatus 2 reads out the hauling basic information (the normal loading capacity "m" and the normal loaded position "c") from the hauling basic information storage means 7 (step s402).

Next, the loaded state notification apparatus 2 uses the hauling information notification means 8 to notify the next operation guiding apparatus 3 of the hauling basic information read out from the hauling basic information storage means 7 (step s403).

The loaded state notification apparatus 2 then receives pressure signals from the pressure sensors 4 (step s404). Incidentally, the timing at which the pressure signals are received from the pressure sensors 4 may be set at the completion of one loading work cycle, or more specifically, set so that the pressure signals are transmitted every time the loading operation of materials onto the vessel 211 by the bucket 213 is completed. In this embodiment, it is judged that one cycle of loading work is completed when the pressure values measured by the pressure sensors 4 change (cause differences) by values greater than or equal to a predetermined value (in Fig. 6, t0, t1, and t2). Thus, values of the pressure sensors 4 are collected at the timing at which the pressures changed by values over the predetermined value. Fig. 6 is a graph showing an example of temporal changes of pressure values measured by the pressure sensors 4 at four positions in this embodiment. The pressure values of the pressure sensors 4 are each indicated with a different kind of line. In the example shown in Fig. 6, the changes in pressures are over the predetermined value at the three change points t0, t1, t2. In this embodiment, each of the pressure sensors 4 is provided with a function of detecting a change point so that each pressure sensor 4 transmits a pressure signal to the loaded state notification apparatus 2 at the timing of each change point t0, t1, t2. As another method, the pressure sensors 4 may transmit their values successively, and the loaded state notification apparatus 2 may calculate and detect a change point.

When the loaded state notification apparatus 2 receives the pressure signals from the pressure sensors 4 as described above, the loaded state notification apparatus 2 calculates the weight "p" and (step s405) and the position (gravity center position "x") (step s406).

The loaded state notification apparatus 2 uses the hauling information notification means 8 to notify the next operation guiding apparatus 3 of the loaded state as the loading information, which includes the calculated weight and the calculated position (gravity center position "x"), (step s407).

After completion of the step s407, the loaded state notification apparatus 2 checks whether or not a loading end signal has been received from the next operation guiding apparatus 3 in the step s419 described later (step s408).

When it is determined in the step s408 that the loading end signal has been received, the series of processing ends.

On the contrary, when it is determined in the step s408 that the loading end signal has not been received, the process returns to the step s404, and the steps s404 to s408 are repeated.

Incidentally, after transmitting the loading start signal in the step s704 in Fig. 7, the next operation guiding apparatus 3 (the hydraulic shovel 202) receives the second response signal (communication signal) (step s411) that has been transmitted from the loaded state notification apparatus 2 in the step s401.

Next, the next operation guiding apparatus 3 that received the second response signal in the step s411 receives the hauling basic information (the normal loading capacity "m" and the normal loaded position "c") notified from the loaded state notification apparatus 2 through the hauling information receiving means 9 in the step s403 (step s412).

The next operation guiding apparatus 3 then reads the loading performance information (the standard loading weight "b") from the loading performance information storage means 11 (step s413).

After completion of the step s413, the next operation guiding apparatus 3 receives the loading information (the loaded state constituted of the weight "p" and the position (the gravity center position "x")) notified from the loaded state notification apparatus 2 in the step s407 (step s414).

After that, the next operation guiding apparatus 3 calculates next loading weight "q" (step s415), and calculates a next gravity center position (next loading position) "y" (step s416), based on the loading information notified from the loaded state notification apparatus 2 and the loading performance information read from the loading performance information storage means 11.

The next operation guiding apparatus 3 then displays the loading information constituted of the calculated next loading weight "p" and the calculated next gravity center position (next loading position) "y" on the display unit 12 as the example shown in Fig. 3 (step s417).

After completion of the step s417, the next operation guiding apparatus 3 checks whether or not the weight "p" has reached the normal loading capacity "m" (step s418).

When it is determined in the step s418 that the weight "p" has reached the normal loading capacity "m", the next operation guiding apparatus 3 transmits a loading end signal to the loaded state notification apparatus 2 (step s419). The series of processing then ends.

On the contrary, when it is determined in the step s418 that the weight "p" has not reached the normal loading capacity "m", the process returns to the step s414, and the steps s414 to s418 are repeated.

Thus, according to this embodiment, the operator of the hydraulic shovel 202 is notified of the loaded state (the weight and the position of materials loaded on the hauling machine) of the materials transmitted from the dump truck 201, whereby the operator can be properly guided on the weight and position of the materials for the next operation.

The loaded materials information navigation system in this embodiment allows the operator of the hydraulic shovel 202 to know how the next loading work should be performed while checking the state of loading on the dump truck 201. It is therefore possible to perform optimal loading in accordance with the normal loading capacity "m" and the normal loaded position "c". Since overloading or biased concentration of materials can be prevented, the tires 212 would not be subjected to an unexpected load. As a result, the tires 212 can be expected to suffice their predetermined life.

Incidentally, in the embodiment described above, the loaded state notification apparatus 2 and the next operation guiding apparatus 3 are used to calculate the next loading weight and the next loading position, and both of the calculated next loading weight and the calculated next loading position are then displayed on the display unit 12 to notify the operator of the hydraulic shovel 202 of them. However, the informing means such as the display unit 12 may notify the operator of only the next loading weight by calculating only the next loading weight.

Industrial Applicability

According to the present invention, when a loading machine such as a hydraulic shovel and a wheel loader loads materials onto a hauling machine such as a dump truck, the operator is guided on loading information. The present invention is widely used for construction machines.

Description of Reference Numerals

1 Loaded materials information navigation system

2 Loaded state notification apparatus

3 Next operation guiding apparatus

4 Pressure sensor

5 Weight calculation means

6 Position calculation means

7 Hauling basic information storage means

8 Hauling information notification means

9 Hauling information receiving means

10 Next operation calculation means

11    Loading performance information storage means

12    Display unit

**Claims**

1.  A loading guide system that, when a loading machine is to load materials onto a hauling machine, guides the loading machine or an operator thereof on at least, of the weight and the position of materials loaded on the hauling machine, the weight of materials on the hauling machine, the loading guide system comprising:

    loaded state detection means that detects at least, of the weight and the position of materials loaded on the hauling machine, the weight of materials on the hauling machine;
    hauling basic information storage means that stores hauling basic information concerning the loaded state of the hauling machine;
    loading performance information storage means that stores loading performance information concerning the loading capacity of the loading machine; and
    next operation calculation means that, when the loading machine is to load materials onto the hauling machine in the next loading, calculates at least, of the next loading weight and the next loading position, the next loading weight based on the hauling basic information, the loading performance information, and the quantity detected by the loaded state detection means.

2.  A loading machine that, when the loading machine is to load materials onto a hauling machine, guides an operator on at least, of the weight and the position of materials loaded on the hauling machine, the weight of materials on the hauling machine, the loading machine comprising:

    informing means that, when the loading machine is to load materials onto the hauling machine in the next loading, calculates at least, of the next loading weight and the next loading position, the next loading weight and then informs the operator of the calculated information, the informing means calculating the information based on hauling basic information concerning the loaded state of the hauling machine, loading performance information concerning the loading capacity of the loading machine, and at least the weight of materials already loaded on the hauling machine of the weight and the position thereof.

3.  The loading machine according to claim 2, further comprising:

    loading means that loads materials onto the hauling machine.

4.  The loading machine according to claim 3, further comprising:

    detection means that detectes the position of the loading means.

5.  The loading machine according to claim 4, wherein:

    the informing means informs the operator that the position of the loading means coincides with the next loading position.

6.  The loading machine according to claim 2, further comprising:

    loading information receiving means that receives the weight and the position of materials loaded on the hauling machine, and the hauling basic information from the hauling machine.

7.  A hauling machine that, when materials is to be loaded onto the hauling machine by a loading machine, guides the loading machine on at least, of the weight and the position of materials loaded on the hauling machine, the weight of materials on the hauling machine, the hauling machine comprising:

    loaded state detection means that calculates the weight and the position of materials loaded on the hauling machine;
    hauling basic information storage means that stores hauling basic information concerning the loaded state of the hauling machine; and
loading information notification means that notifies the loading machine of the weight and the position of materials loaded on the hauling machine, and the hauling basic information concerning the loaded state.

8. The loading guide system according to claim 1, wherein:

the hauling basic information is the normal loading capacity and the normal loaded position of the hauling machine;
the loading performance information is the standard loading weight of the loading machine; and
the next operation calculation means determines,

a) when a value obtained by subtracting the weight of materials on the hauling machine from the normal loading capacity is greater than or equal to the standard loading weight, the standard loading weight to be the next loading weight, and
b) when the value obtained by subtracting the weight of materials on the hauling machine from the normal loading capacity is smaller than the standard loading weight, the value obtained by subtracting the weight of materials on the hauling machine from the normal loading capacity to be the next loading weight.

9. The loading guide system according to claim 8, wherein:

the next operation calculation means subtracts the product of the weight and the position of the materials on the hauling machine from the product of the normal loading capacity and the normal loaded position, divides the value obtained by the subtraction by the next loading weight, and determines the value obtained by the division to be the next loading position.

**Amended claims under Art. 19.1 PCT**

**1.** (Currently amended) A loading guide system that, when a loading machine is to load materials onto a hauling machine, guides the loading machine or an operator thereof on the weight of materials loaded on the hauling machine, the loading guide system comprising:

loaded state detection means that detects the weight and the position of materials loaded on the hauling machine;
hauling basic information storage means that stores hauling basic information concerning the loaded state of the hauling machine;
loading performance information storage means that stores loading performance information concerning the loading capacity of the loading machine; and
next operation calculation means for, when the loading machine is to load materials onto the hauling machine in the next loading, calculating the next loading weight and the next loading position based on the hauling basic information, the loading performance information, and the quantity detected by the loaded state detection means.

**2.** (Currently amended) A loading machine that, when the loading machine is to load materials onto a hauling machine, guides an operator on the weight and the position of materials loaded on the hauling machine, the loading machine comprising:

informing means that, when the loading machine is to load materials onto the hauling machine in the next loading, calculates the next loading weight and the next loading position and then informs the operator of the calculated information, the informing means calculating the information based on hauling basic information concerning the loaded state of the hauling machine, loading performance information concerning the loading capacity of the loading machine, and the weight of materials already loaded on the hauling machine of the weight and the position thereof.

**3.** The loading machine according to claim 2, further comprising:

loading means that loads materials onto the hauling machine.

**4.** The loading machine according to claim 3, further comprising:

detection means that detects the position of the loading means.

**5.** The loading machine according to claim 4,
wherein:

the informing means informs the operator that the position of the loading means coincides with the next loading position.

**6.** The loading machine according to claim 2, further comprising:

loading information receiving means that receives the weight and the position of materials loaded on the hauling machine, and the hauling basic information from the hauling machine.

**7.** (Currently amended) A hauling machine that, when materials is to be loaded onto the hauling machine by a loading machine, guides the loading machine on the weight and the position of materials loaded on the hauling machine, the weight of materials on the hauling machine, the hauling machine comprising:

loaded state detection means that calculates the weight and the position of materials loaded on the hauling machine;
hauling basic information storage means that stores hauling basic information concerning the loaded state of the hauling machine; and
loading information notification means that notifies the loading machine of the weight and the position of materials loaded on the hauling machine, and the hauling basic information concerning the loaded state.

**8.** The loading guide system according to claim 1, wherein:

the hauling basic information is the normal loading capacity and the normal loaded position of the hauling machine;
the loading performance information is the standard loading weight of the loading machine; and
the next operation calculation means determines,

a) when a value obtained by subtracting the weight of materials on the hauling machine from the normal loading capacity is greater than or equal to the standard loading weight, the standard loading weight to be the next loading weight, and
b) when the value obtained by subtracting the weight of materials on the hauling machine from the normal loading capacity is smaller than the standard loading weight, the value obtained by subtracting the weight of materials on the hauling machine from the normal loading capacity to be the next loading weight.

**9.** The loading guide system according to claim 8, wherein:

the next operation calculation means subtracts the product of the weight and the position of the materials on the hauling machine from the product of the normal loading capacity and the normal loaded position, divides the value obtained by the subtraction by the next loading weight, and determines the value obtained by the division to be the next loading position.

# FIG. 1

# FIG. 2

# FIG. 3

302a

301a

FRONT

302a

12a

REAR

45t/45t — 304a

303a

302b

301b

FRONT

302b

12b

REAR

145t/35t — 304b

303b

# FIG. 4

START

S401 — RECEIVE A LOADING START SIGNAL OF THE LOADING MACHINE

S402 — READ HAULING BASIC INFORMATION

S403 — NOTIFY OF THE HAULING BASIC INFORMATION

S404 — RECEIVE SIGNALS FROM THE PRESSURE SENSORS

S405 — CALCULATE WEIGHT OF MATERIALS

S406 — CALCULATE A POSITION OF MATERIALS

S407 — NOTIFY OF THE HAULING INFORMATION

S408 — HAS A LOADING END SIGNAL BEEN RECEIVED ?   NO

YES

END

START

S411 — RECEIVE A RESPONSE SIGNAL OF THE HAULING MACHINE

S412 — RECEIVE THE HAULING BASIC INFORMATION

S413 — READ LOADING PERFORMANCE INFORMATION

S414 — RECEIVE THE HAULING INFORMATION

S415 — CALCULATE NEXT LOADING WEIGHT

S416 — CALCULATE A NEXT GRAVITY CENTER POSITION

S417 — DISPLAY THE LOADING INFORMATION

S418 — HAS THE LOADING QUANTITY REACHED THE NORMAL LOADING CAPASITY ?   NO

YES

S419 — TRANSMIT AN END SIGNAL

END

# FIG. 5

# FIG. 6

# FIG. 7

START

S711 ── HAS A SEARCH SIGNAL FROM A LOADING MACHINE BEEN RECEIVED ? ── NO

YES

S712 — READ THE OWN ID NUMBER

S713 — TRANSMIT A RESPONSE SIGNAL TO THE LOADING MACHINE

S401

START

S701 — TRANSMIT A SEARCH SIGNAL FOR SEARCHING FOR A HAULING MACHINE

S702 — HAS A RESPONSE SIGNAL RESPONDING TO THE SEARCH SIGNAL BEEN RECEIVED? ── NO

YES

S703 — CALCULATE WHICH HAULING MACHINE IS TO PERFORM THE NEXT LOADING

S704 — TRANSMIT A LOADING START SIGNAL TO THE TARGET HAULING MACHINE

S411

# FIG. 8

# FIG. 9

## INTERNATIONAL SEARCH REPORT

| International application No. |
| --- |
| PCT/JP2011/050879 |

### A. CLASSIFICATION OF SUBJECT MATTER
*E02F9/26*(2006.01)i

According to International Patent Classification (IPC) or to both national classification and IPC

### B. FIELDS SEARCHED

Minimum documentation searched (classification system followed by classification symbols)
E02F9/26

Documentation searched other than minimum documentation to the extent that such documents are included in the fields searched

| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
CiNii

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 8-201152 A (Komatsu Ltd.),<br>09 August 1996 (09.08.1996),<br>paragraphs [0032] to [0035], [0050], [0064],<br>[0083]; fig. 1 to 4, 7 to 10<br>& US 5822224 A      & GB 2313448 A<br>& WO 1996/024031 A1   & AU 4496796 A<br>& CN 1194032 A      & AU 698469 B | 1-3, 6-8<br>4, 5<br>9 |
| Y<br>A | WO 2003/33829 A1 (Hitachi Construction<br>Machinery Co., Ltd.),<br>24 April 2003 (24.04.2003),<br>page 12, line 25 to page 13, line 6; page 19,<br>line 22 to page 20, line 16; fig. 4, 5, 10 to<br>12<br>& JP 3830151 B      & US 2005/0000703 A1<br>& EP 1445386 A1     & CN 1571872 A | 4, 5<br>9 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 April, 2011 (08.04.11) | Date of mailing of the international search report<br>19 April, 2011 (19.04.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**EP 2 527 541 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008240461 A
- JP 2007230425 A